**Europäisches Patentamt**

**European Patent Office**

**Office européen des brevets**

(19)

(11) Veröffentlichungsnummer : **0 352 431 B1**

(12)

# EUROPÄISCHE PATENTSCHRIFT

(45) Veröffentlichungstag der Patentschrift :
04.03.92 Patentblatt 92/10

(51) Int. Cl.$^5$ : **B62D 11/10**

(21) Anmeldenummer : **89109503.6**

(22) Anmeldetag : **26.05.89**

(54) **Steuervorrichtung zur Differenzgeschwindigkeitslenkung eines Fahrzeuges.**

(30) Priorität : **28.07.88 DE 3825670**

(43) Veröffentlichungstag der Anmeldung :
**31.01.90 Patentblatt 90/05**

(45) Bekanntmachung des Hinweises auf die
Patenterteilung :
**04.03.92 Patentblatt 92/10**

(84) Benannte Vertragsstaaten :
**AT CH DE FR GB LI SE**

(56) Entgegenhaltungen :
**WO-A-87/04986**
**DE-C- 2 511 176**
**FR-A- 2 127 711**

(73) Patentinhaber : **CLAAS OHG**
**Münsterstrasse 33**
**W-4834 Harsewinkel 1 (DE)**

(72) Erfinder : **Dückinghaus, Heinrich**
**Hambrinker Heide 23**
**W-4800 Bielefeld 14 (DE)**

(74) Vertreter : **Hanewinkel, Lorenz, Dipl.-Phys.**
**Patentanwalt Ferrariweg 17a**
**W-4790 Paderborn (DE)**

## Beschreibung

Die Erfindung betrifft eine Steuervorrichtung zur Differentialgeschwindigkeitslenkung eines Fahrzeuges mit einem Steuerschieber, der in einem ersten Freiheitsgrad, einem Lenk-Freiheitsgrad, in zwei Richtungen betätigbar ist und in einem zweiten Freiheitsgrad, einem Vor-Rückwärtsgeschwindigkeits-Freiheitsgrad in zwei Richtungen betätigbar ist, wobei der Steuerschieber jeweils bis zu zwei von insgesamt vier Steuerventilen betätigungsabhängig öffnend steuert, wobei die Anordnung der Steuerventile zu dem Steuerschieber derart ist, daß dieser das erste der Steuerventile vorwärts- und/oder rechtsgestellt-betätigt zunehmend öffnet, das zweite der Steuerventile vorwärts- und/oder linksgestellt-betätigt zunehmend öffnet, das dritte der Steuerventile rückwärts- und/oder linksgestellt-betätigt zunehmend öffnet und das vierte der Steuerventile rückwärts- und/oder linksgestellt-betätigt zunehmend öffnet, und wobei das erste und zweite Steuerventil über ein erstes Umschaltventil jeweils an einen vorwärtssteuernden Steueranschluß jeweils eines rechten Fahrantriebes und eines linken Fahrantriebes geführt sind, und von denen das dritte und das vierte Steuerventil über ein zweites Umschaltventil jeweils mit einem rückwärtssteuernden Steueranschluß jeweils mit einem der beiden Fahrantriebe verbunden sind.

Eine derartige Steuervorrichtung ist aus FR-A-2127711 bekannt. Bei dieser werden die Vor- und Rückwärtstellungen des Steuerschiebers über einen elektrischen Kontakt abgetastet, und mit dessen Kontakt werden die Umschaltventile umgesteuert, was die Sicherheit vermindert. Außerdem ist der Steuerschieber über einen in zwei Freiheitsgraden zu betätigenden Bedienhebel zu betätigen, was völlig ungewohnt ist.

Weiterhin ist aus DE-PS 25 11 176 ist eine Differenzgeschwindigkeit-Lenksteuervorrichtung bekannt, bei der vier steuerbare Ventile um einen Steuerhebel umfangsseitig verteilt sind, von denen je eines gegenüberliegend angeordnet einer Vorwärtsbzw. einer Rückwärtsfahrtsteuerung dient und die beiden anderen, seitlich angeordnet, einer differentiellen Antriebssteuerung eines rechten und linken hydraulischen steuerbaren Fahrantriebes mittels zwischengeschalteter Wechselventile dienen. Die Betätigung der Vorrichtung mittels des zweidimensional beweglichen Steuerhebels ist erheblich abweichend von dem üblichen Lenken und Geschwindigkeitssteuern mittels zweier getrennter eindimensional beweglicher Bedienelemente anderer Fahrzeugarten. Darüberhinaus besteht der Nachteil, daß für ein Fahren in einer engen Kurve ein Zurücklaufen des einen Fahrantriebes bei gleichzeitigem Vorlaufen des anderen Fahrantriebes nur durch eine zusätzliche Betätigung eines besonderen Umkehrventiles möglich ist, was die Bedienung weiter erschwert und vom gewohnten Bedienen abweicht, sowie einen diskontinuierlichen Lenk- und Fahrbetrieb ergibt.

Die vielen verschiedenen Steuerelemente der vorbekannten Steuereinrichtungen und deren Verbindungen untereinander sind aufwendig und beinhalten ein erhöhtes Sicherheitsrisiko. Darüberhinaus erfordert die Geradeausfahrt mit diesen ein ständiges Lenken und einen genauen Abgleich der Druckverhältnisse in den Steuer- und Wechselventilen.

Es ist Aufgabe der Erfindung, eine Steuervorrichtung zur Differenzgeschwindigkeitslenkung zu offenbaren, die einfacher aufgebaut und sicherer ist und einer konventionellen Bedienung entsprechend bedienbar ist sowie sinnrichtig lenkbar ist.

Die Lösung der Aufgabe besteht darin, daß die beiden Umschaltventile unmittelbar von dem Steuerschieber jeweils vorwärtsgestellt in eine erste Umschaltstellung und rückwärtsgestellt in eine zweite Umschaltstellung verbracht sind und daß der Steuerschieber mit einem drehbaren Lenkrad in seinem Lenk-Freiheitsgrad verstellbar verbunden ist und mit einem verschwenkbaren Fahrhebel nur in seinem Vor-Rückwärtsgeschwindigkeits-Freiheitsgrad verstellbar verbunden ist.

Vorteilhafte Ausgestaltungen sind in den Unteransprüchen angegeben.

Der kompakte Steuerblock beinhaltet die vier Steuerventile und die Wechselventile, so daß zu deren Verbindung keine externen Leitungen und Leitungsverbinder benötigt werden. Außerdem erbringen die Umschaltventile durch ihre Anordnung unmittelbar eine Umkehrfunktion, die vorteilhaft kontinuierlich und ohne zusätzliche Bedienungsmaßnahmen wirksam wird.

Aus Gründen der einfachen Herstellbarkeit bei hoher Passungsgenauigkeit der Steuerschieber ist vorteilhaft ein zylindrischen Aufbau des Inneren des Steuerblockes und der Ventilschieber vorgesehen so daß die Steuerbewegungen axial und zirkular verschiebend bzw. drehend erfolgen.

In einer bevorzugten Ausführungsform wird die konventionelle rotatorische Lenkbewegung eines Lenkrades über ein Spindelgetriebe in eine axiale Steuerbewegung umgesetzt, wobei eine geeignete Untersetzung erfolgt, so daß z. B. nach zwei Umdrehungen des Lenkrades aus einer Mittelstellung heraus die maximale Lenkwirkung in der entsprechenden Richtung erbracht wird. Die Schwenkstellung eines Geschwindigkeits- und Vorwärts-Rückwärtsstellhebels wird über ein Hebelgetriebe geeignet in die zirkularen Steuerstellungen umgesetzt. Bei entsprechender Wahl der Getriebe zwischen den Bedienelementen und dem Steuerschieber läßt sich auch eine umgekehrte Zuordnung der Steuerfreiheitsgrade des Steuerschiebers treffen, wie sich anschaulich aus dem in der Ebene dargestellten zweidimensionalen Steuerschema ergibt.

Eine vorteilhafte Ausgestaltung der Erfindung ist in den Figuren 1 bis 8 dargestellt.

Fig. 1 zeigt die Steuervorrichtung schematisch im Neutralstellung;

Fig. 2 zeigt die Steuervorrichtung schematisch im Vorwärtsbetrieb geradeauslenkend;

Fig. 3 zeigt die Steuervorrichtung schematisch im Vorwärtsbetrieb rechtslenkend;

Fig. 4 zeigt die Steuervorrichtung schematisch im Rückwärtsbetrieb geradeauslenkend;

Fig. 5 zeigt eine Seitenansicht der Steuervorrichtung;

Fig. 6 zeigt eine Seitenansicht mit Innenstrukturen;

Fig. 7 zeigt einen versetzten Schnitt mit Steuerventilen durch den Steuerblock;

Fig. 8 zeigt einen gegen Fig. 7 um 90° gedrehten achsialen Schnitt VIII-VIII durch den Steuerblock.

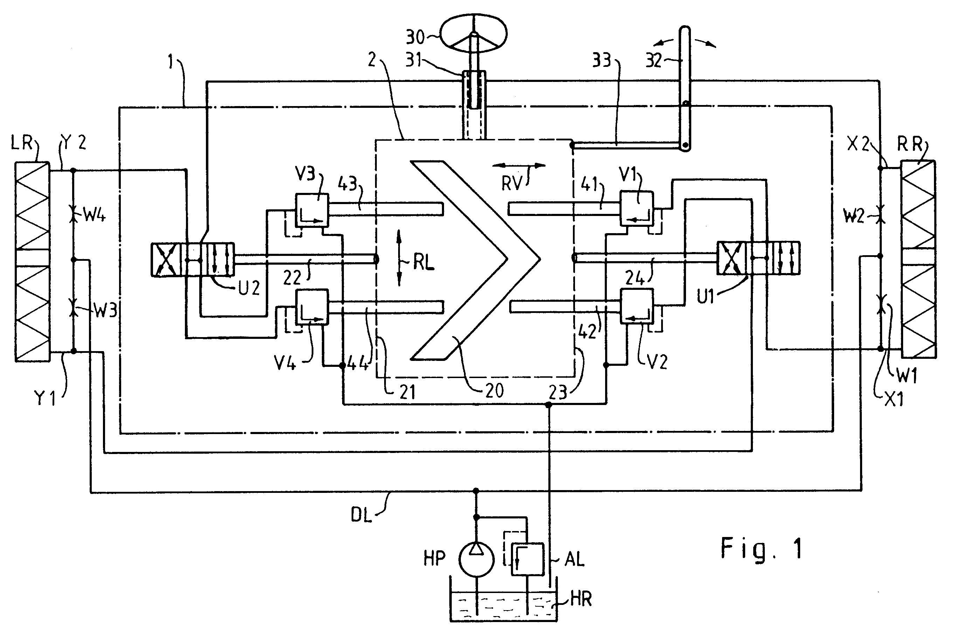

Fig. 1 zeigt die Fahr- und Lenksteuervorrichtung schematisch mit verkleinerten Bedien- und Antriebsteilen. In dem strichpunktiert gezeichneten Steuerblock (1) ist der gestrichelt dargestellte Steuerschieber (2) in zwei Freiheitsgraden verschieblich angeordnet. Die Verdrehsicherung ist nicht dargestellt. In den Richtungen (RL) des ersten Freiheitsgrades erfolgt eine Verschiebung durch eine Verdrehung des Lenkrades (30) über ein Spindelgetriebe (31) und in den Richtungen (RV) des zweiten Freiheitsgrades, die senkrecht zu den ersten Richtungen (RL) stehen, erfolgt eine Verschiebung über eine Schwenkbetätigung eines Fahr-Schwenkhebels (32) über das Gestänge (33). Der Steuerschieber (2) wirkt mit dem Steuersteg (20) auf die Stößel (41 - 44) der vier Steuerventile (V1 - V4) je nach seiner Stellung ein. Außerdem betätigt der Steuerschieber (2) entsprechend der Stellung in den Richtungen (RV) über die schematisch dargestellten Koppelglieder (21 - 24) die beiden Umsteuerventile (U1, U2).

Die Versorgung der Steuervorrichtung erfolgt über eine Druckleitung (DL) durch die Hydraulikpumpe (HP), die Hydrauliköl mit einem voreingestellten Druck über Drosseln (W1 - W4) an die Fahrantriebe (LR, RR) liefert. Dort befinden sich beispielsweise federbelastete Differentialdruckzylinder, die paarweise mit den Steueranschlüssen (X1, X2; Y1, Y2) verbunden sind. Jeweils die Vorwärts-Steueranschlüsse (X1, Y1) und leweils die Rückwärtssteueranschlüsse (X2, Y2) des rechten Fahrantriebes (RR) bzw. des linken Fahrantriebes (LR) sind mit je einem der Umsteuerventile (U1, U2) verbunden. Diese sind andererseits mit den vier Proportional-Steuerventilen (V1 - V4) zugeordnet verbunden.

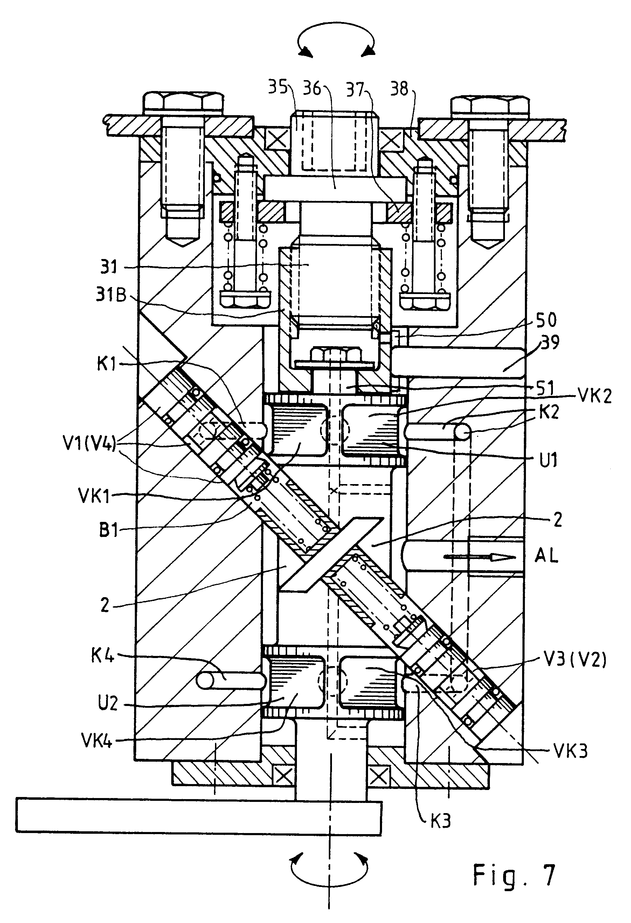

Der Überlauf der Steuerventile (V1 - V4) ist jeweils zum Reservoir (HR) über die Abflußleitung (AL) zurückgeführt. In den dargestellten neutralen Grundstellung ist der Steuersteg (20) berührungslos zu den Stößeln (41 - 44) angeordnet, so daß die Steuerventile (V1 - V4) in ihrer Grundstellung sind. Außerdem sind die Umsteuerventile (U1, U2) in einer neutralen Zwischenstellung, so daß auch dort eine Sperrung oder Gleichverteilung des Hydraulikölflusses erfolgt. so daß die Fahrantriebe (LR, RR) Gleichdruck bekommen und somit in einen Stillstand gesteuert sind. Die Umsteuerventile (U1, U2) bestehen aus Ventilkammern (VK1 - VK4) - Fig.7 -, die ausgangseitig mit den Steuerventilen (V1 - V4) in Verbindung stehen und eingangseitig je nach einer gegebenen Vor-Rück-Steuerstellung zu den Steueranschlüssen (X1, Y1; X2, Y2) führen.

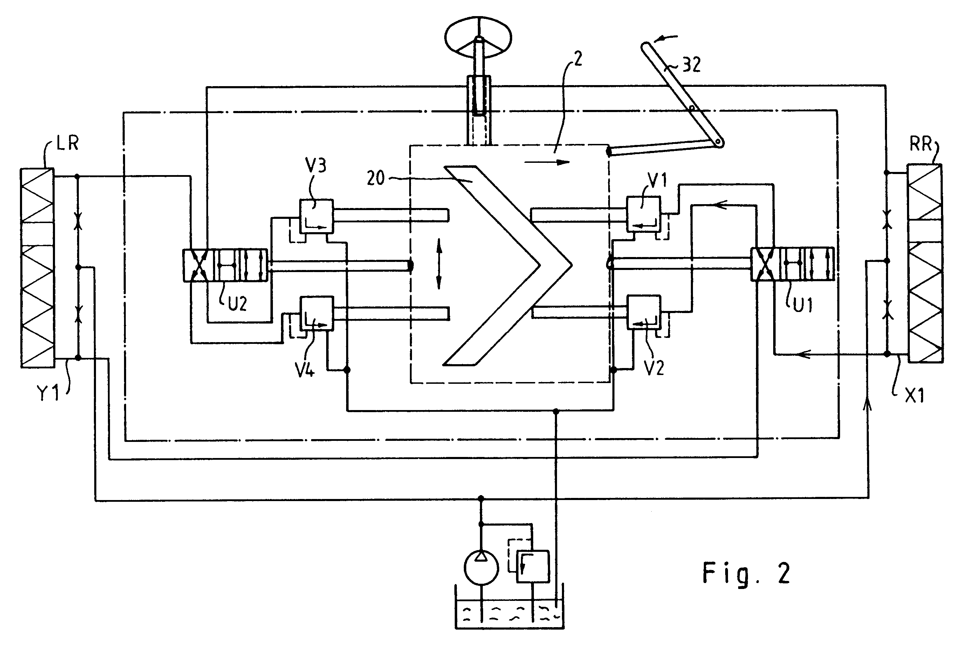

In Fig. 2 ist das gleiche Steuerungsschema mit einer Stellung des Fahrbedienungshebels (32) für Vorwärtsfahrt gezeigt. Dadurch hat der Steuerschieber (2) mit dem V-förmig gestalteten Steuersteg (20) die Steuerventile (V1, V2) angesteuert und die Umsteuerventile (U1, U2) in die Ein- und Ausgänge kreuzweise verbindende Stellung verbracht. Auf diese Weise fließt über die Vorwärtssteueranschlüsse (X1, Y1) von den beiden Fahrantrieben (RR, RL) das Hydrauliköl gemäß der jeweiligen Steuerventilöffnung, so daß die Fahrantriebe (RR, RL) demgemäß parallellaufend, gleich schnell das Fahrzeug geradeauslaufend antreiben.

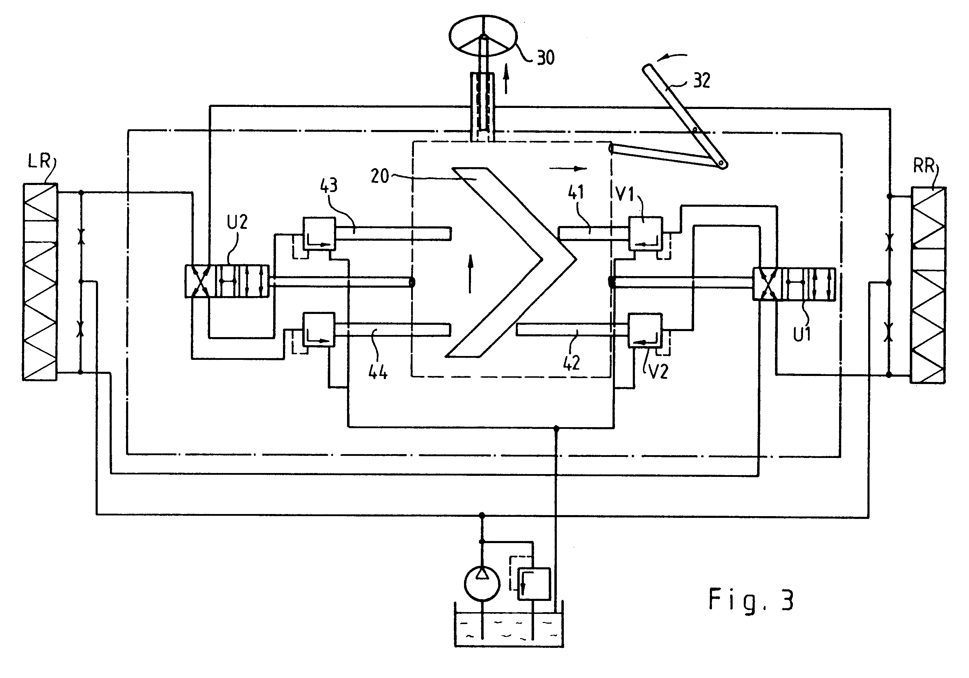

In Fig. 3 ist das Steuerungsschema in einer stark verschwenkten, einem Schnellauf entsprechenden Vorwärtsstellung des Fahrhebels (32) und mit einem Rechtseinschlag des Lenkrades (30) gezeigt, so daß, bedingt durch die V-Gestalt des Steuersteges (20), die Verstellung des vorwärtssteuernden Steuerventils (V1) des linken Fahrantriebes (LR) einen Druckanstieg und die Verstellung des entsprechenden Steuerventils (V2) des rechten Fahrantriebes (RR) eine Druckminderung im Steuerkreis bewirkt, so daß das Fahrzeug erwartungsgemäß nach rechts fährt, wobei die Geschwindigkeit etwa gleich zur Geradeausfahrt bei gleicher Fahrhebelstellung bleibt. Bei einer umgekehrten Lenkradverdrehung kehren sich die Öffnungsverhältnisse der Steuerventile (V1, V2) um und das Fahrzeug fährt demgemäß in die andere Richtung.

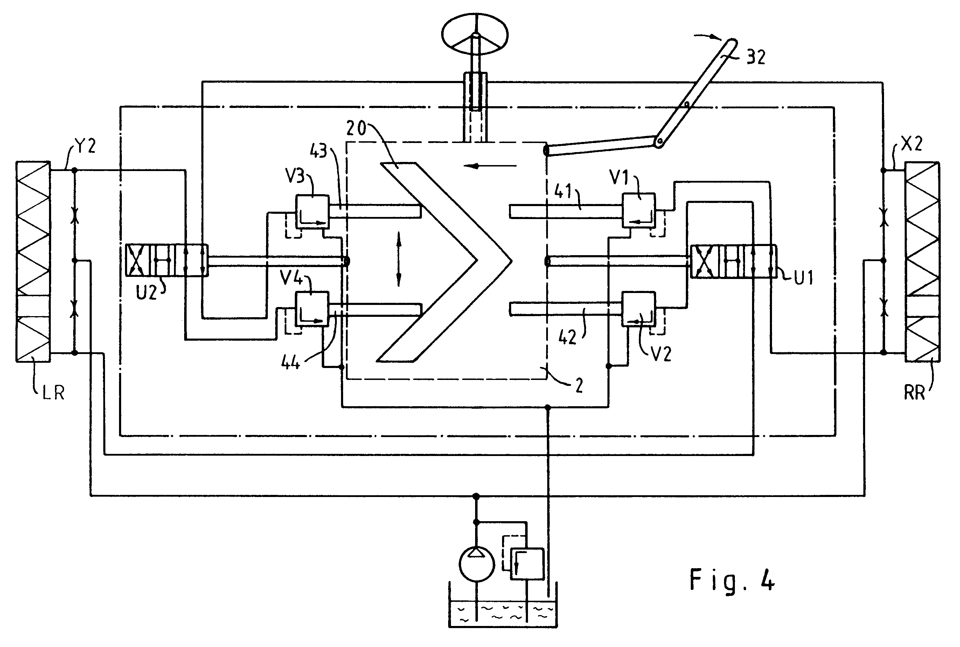

Befindet sich der Fahrhebel (32), wie in Fig. 4 gezeigt, in einer Rückwärtsstellung, so bewirken bei mittlerer Lenkradstellung die beiden Rückwärt-Steuerventile (V3, V4) Druckerhöhung, und die Umsteuerventile (U1, U2) sind in ihrer Paralleldurchflußstellung. Dadurch fließt das Hydrauliköl über die Rückwärtssteueranschlüsse (X2, Y2) der Fahrantriebe (RR, LR) und steuert deren Rückwärtslauf. Wird der Steuerschieber (2) durch eine Linksdrehung des Lenkrades (30) nach unten verschoben, so wird das Ventil (V3), das über das Umsteuerventil (U2) den rechten Fahrantrieb (RR) beaufschlagt, verstärkt betätigt, und das andere Ventil (V4) geringer betätigt, so daß das Fahrzeug linksdrehend zurückfährt. Die Umsteuerventile (U1, U2) bewirken somit ein konventionelles gleichsinniges Lenken beim Vor- und Zurückfahren.

Sofern in der Vorwärtsfahrstellung mit einem Lenkradeinschlag nach rechts, gemäß Fig. 3, der Fahrhebel (32) sich in einer geringeren Schwenkstellung für eine langsamere Fahrt als dargestellt befindet, so wird das Vorwärtssteuerventil (V1) des linken Fahrantriebes (LR) jeweils teilweise betätigt sein, so daß eine langsame Wendung nach rechts erfolgt. Durch eine geeignete Anordnung und Ausgestaltung des Steuersteges (20) zur Lage der Stößel (41 - 44) in Verbindung mit der Ausgestaltung der Umschaltcharakteristik der Umsteuerventile (U1, U2) läßt es sich erreichen, daß nur in einer der Fahrstellungen und nicht in der Neutralstellung eine Kurvenfahrt mit gegenläufigen Antrieben erfolgt und ein gegenläufiger Antrieb auch nur bei niedrigen Vor- bzw. Rück-Fahrstellungen wirksam wird. Hierdurch wird eine übermäßige Querbelastung von Raupenantrieben vermieden und dem erhöhten Antriebsleistungsbedarf bei einer Kurvenfahrt mit engem Radius vorteilhaft Rechnung getragen. Aus diesem Grund erfolgt der Stellungsübergang der Umsteuerventile (U1, U2) über einen kurzen neutralen Bereich, der im Schema der Fig. 1 dargestellt ist, jedoch aus den weiteren Figuren genauer ersichtlich ist.

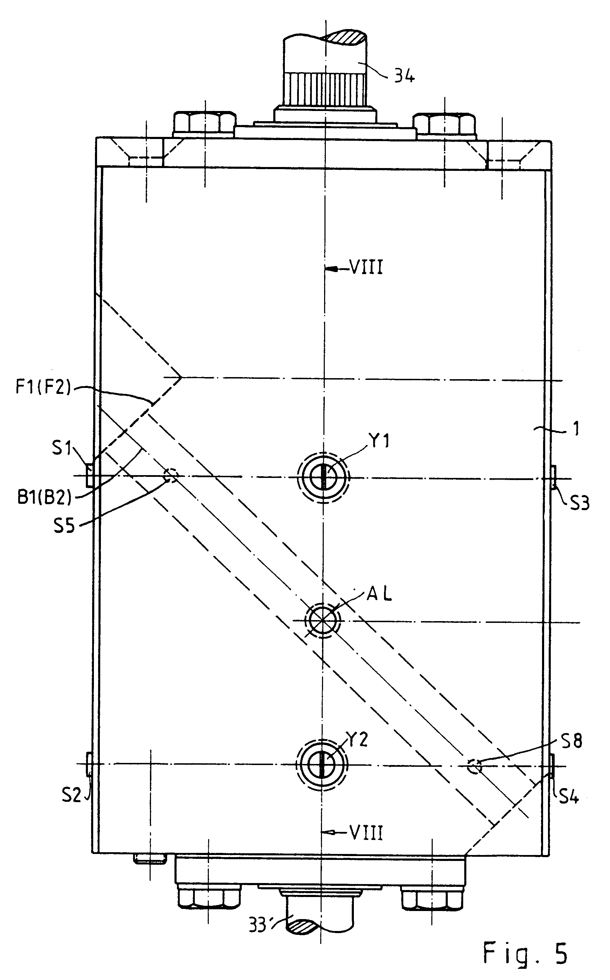

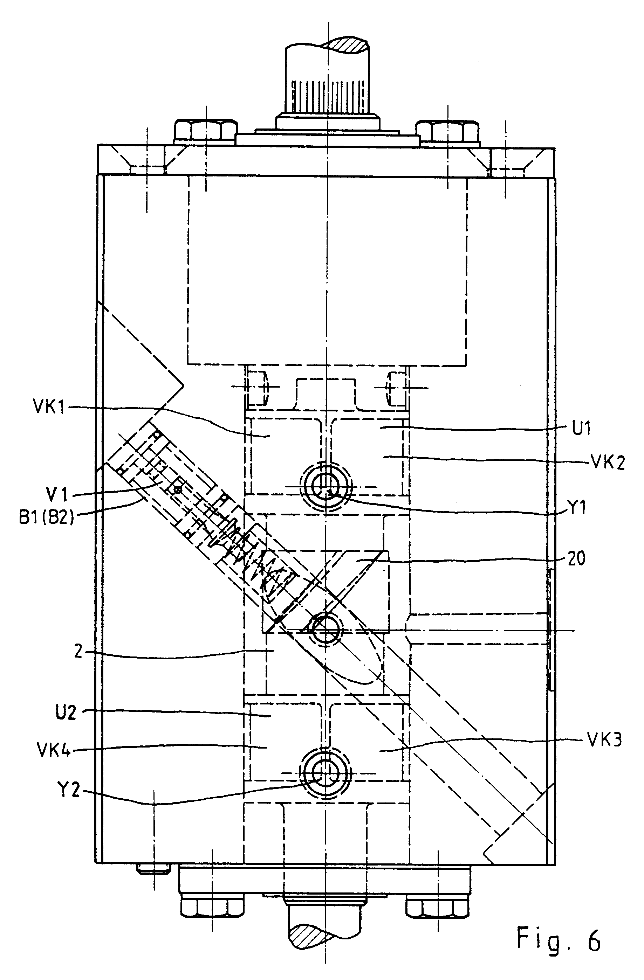

Eine konkrete vorteilhafte Ausgestaltung der Steuervorrichtung zeigen Fig. 5 und 6 in einer Seitenansicht. Der Steuerblock (1) ist symmetrisch gestaltet und von Bohrungen durchsetzt, die zur Aufnahme des zylindrischen Steuerschiebers und der ventile dienen, sowie die Verbindungswege der Hydraulik bilden. An einem Ende ist die Lenksäule (34) axial zum Steuerschieber (2) eingeführt und gelagert, und andernends greift das Fahrsteuergestänge an der Schwenkwelle (33′) am Steuerschieber (2) an, der dort im Steuerblock, abgedichtet gelagert ist. Die Hydraulikanschlüsse (Y1, Y2) für den linken Fahrantrieb sind geöffnet gezeigt. Auf der entgegengesetzten Seite liegen die beiden Anschlüsse für den rechten Fahrantrieb.

Von unter 45° zur Zentralachse liegenden Ansenkungen (F1, F2) sind zwei in der Tiefe vor bzw. hinter der Zentralachse liegende Bohrungen (B1, B2) durch den Ventilblock gelegt, in die von beiden Seiten je eines der Steuerventile eingeschraubt sind.

Fig. 6 zeigt gestrichelt die Lage eines Steuerventils (V1) in der oben liegenden Bohrung (B1). Weiterhin ist der Steuerschieber (2) mit dem einen der schraubenwendelförmigen Steuerstege (20) gestrichelt dargestellt, der auf den federbelasteten, hülsenförmigen Ventilstößel der beiderseitig angeordneten Ventile kraftschlüssig einwirkt. Der Steuerschieber (2) ist in der Neutralstellung bei höchstem Lenkradeinschlag dargestellt, wie man an den Umsteuerventilen (U1, U2) sieht, die mit ihren Steuerkanten über die Bohrungen der Steueranschlüsse (Y1, Y2) die Kammern (VK1, VKZ; VK3, VK4) verbinden. Die Steuerstege (20) weisen eine Steigung 1 auf; die Achsen der Bohrungen (B1) stehen senkrecht zum Verlauf der Steuerstege (20), wodurch eine geringe Abnutzung und leichte Betätigung erreicht wird. Der Schwenkarbeitsbereich des Steuerschiebers (2) beträgt etwa 30°.

Fig. 7 zeigt einen versetzten Schnitt durch einen Ventilblock, so daß die Steuerventile (V1, V3) in der Bohrung (B1) liegend und der Steuerschieber (2), der tiefer liegt, dargestellt sind. Der Steuerschieber (2) befindet sich in Neutralstellung ohne Lenkradeinschlag. Die Kanäle (K1 - K4), die durch von außen verschlossene, als winklig aufeinandertreffende Bohrungen in einfacher Weise hergestellt sind, verbinden die sichtbaren und die unsichtbaren Ventile mit den Umsteuerventilen (U1, U2).

Weiterhin ist das Soindelgetriebe (31) dargestellt, das eine Lenkraddrehung in eine axiale Schubbewegung des Steuerschiebers (2) umsetzt. Der Anschluß (35) der Lenksäule ist mit einem ringförmigen Kragen (36) durch eine federbelastete ringförmige Bremsscheibe (37) gegen den abgedichteten Gehäusedeckel (38) schwergängig drehbar innenseitig im Steuerblock gelagert. Die Gewindebuchse (31B) des Spindelgetriebes (31) ist mit einem Stift (39) in einer axialen Nut (50) verschiebbar drehgesichert. Der Steuerschieber (2) ist mit einem Ansatzbolzen (51) drehbar an der Gewindebuchse (31B) befestigt. Auf diese weise sind die Verstellfreiheitsgrade des Steuerschiebers (2) der Lenk- bzw. Fahreinstellung eindeutig zugeordnet.

Die verschiedenen freien Kammern neben den Umsteuerventilen (U1, U2) und die nicht dargestellten Rückläufe der Ventile (V1 - V4) sind durch Bohrungen miteinander und mit der Abflußleitung (AL) verbunden.

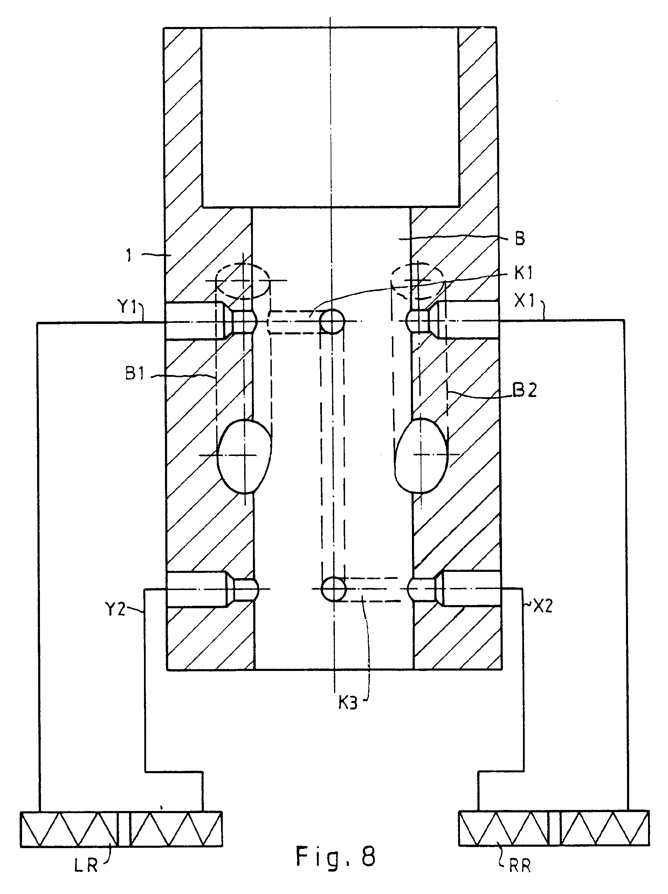

Fig. 8 zeigt einen axialen Schnitt VIII-VIII durch den Ventilblock. Die gegen die Zentralachse versetzten Bohrungen (B1, B2), die die Zentralbohrung (B) schneiden, sind zu erkennen. Die Kanäle (K1, K2) bilden die Verbindungen der Steuerventile zu den Umschaltventilen. Die Steueranschlüsse (X1, X2; Y1, Y2) sind zu den schematisch dargestellten Fahrantrieben (LR, RR) verbunden.

## Patentansprüche

1. Steuervorrichtung zur Differentialgeschwindigkeitslenkung eines Fahrzeuges mit einem Steuerschieber (2), der in einem ersten Freiheitsgrad, einem Lenk-Freiheitsgrad (RL), in zwei Richtungen betätigbar ist und in einem zweiten Freiheitsgrad, einem Vor-Rückwärtsgeschwindigkeits-Freiheitsgrad (RV) in zwei Richtungen betätigbar ist, wobei der Steuerschieber (2) jeweils bis zu zwei von insgesamt vier Steuerventilen (V1 - V4) betätigungsabhängig öffnend steuert, wobei die Anordnung der Steuerventile (V1 - V4) zu dem Steuerschieber (2) derart ist, daß dieser das erste der Steuerventile (V1) vorwärts- und/oder rechtsgestellt-betätigt zunehmend öffnet, das zweite der Steuerventile (V2) vorwärts- und/oder linksgestelltbetätigt zunehmend öffnet, das dritte

4

der Steuerventile (V3) rückwärts- und/oder linksgestellt-betätigt zunehmend öffnet und das vierte der Steuerventile (V4) rückwärts- und/oder linksgestellt-betätigt zunehmend öffnet, und wobei das erste und zweite Steuerventil (V1, V2) über ein erstes Umschaltventil (U1) jeweils an einen vorwärtssteuernden Steueranschluß (X1, Y1) jeweils eines rechten Fahrantriebes (RR) und eines linken Fahrantriebes (LR) geführt sind, und von denen das dritte und das vierte Steuerventil (V3, V4) über ein zweites Umschaltventil (U2) jeweils mit einem rückwärtssteuernden Steueranschluß (X2, Y2) jeweils mit einem der beiden Fahrantriebe (RR, LR) verbunden sind, dadurch gekennzeichnet, daß die beiden Umschaltventile (U1, U2) unmittelbar von dem Steuerschieber (2) jeweils vorwärtsgestellt in eine erste Umschaltstellung und rückwärtsgestellt in eine zweite Umschaltstellung verbracht sind und daß der Steuerschieber (2) mit einem drehbaren Lenkrad (30) in seinem Lenk-Freiheitsgrad (RL) verstellbar verbunden ist und mit einem verschwenkbaren Fahrhebel (32) nur in seinem Vor-Rückwärtsgeschwindigkeits-Freiheitsgrad (RV) verstellbar verbunden ist.

2. Steuervorrichtung nach Anspruch 1, dadurch gekennzeichnet, daß das Lenkrad (30) über ein Spindelgetriebe (31) mit dem Steuerschieber (2) verbunden ist.

3. Steuervorrichtung nach Anspruch 1, dadurch gekennzeichnet, daß der Fahrhebel (32) über ein Hebelgestänge (33) mit dem Steuerschieber (2) verbunden ist.

4. Steuervorrichtung nach Anspruch 1, dadurch gekennzeichnet, daß die Umschaltventile (U1, U2) durch Ventilkammern (VK1 - VK4) in dem Steuerschieber (2) in Verbindung mit von den Steuerventilen (V1 - V4) kommenden Kanälen (K1 - K4) und zu den Steueranschlüssen (X1, X2; Y1, Y2) führenden Ausgängen, die in einem Steuerblock (1) angeordnet sind, der den Steuerschieber (2) dicht umgibt, gebildet sind.

5. Steuervorrichtung nach einem der vorstehenden Ansprüche, dadurch gekennzeichnet, daß der Steuerschieber (2) zu den Richtungen der Freiheitsgrade (RL, RV) diagonal angeordnete Steuerstege (20) trägt, der die Steuerventile (V1 - V4) jeweils über einen Stößel (41 - 44) betätigt.

6. Steuervorrichtung nach Anspruch 4 und 5, dadurch gekennzeichnet, daß jeweils in einer Neutral- und in einer Geradeauslenk-Steuerstellung sich die Ventilkammern (VK1 - VK4) jeweils in beide Richtungen der Freiheitsgrade (RL, RV) erstrecken und sich die Ausgänge, die zu den vorwärtsantreibenden Steueranschlüssen (X1, Y1) führen, jeweils an Grenzen der Ventilkammern (VK1, VK2) der ersten und zweiten Steuerventile (V1, V2) bezüglich der Vor-Rückwärtsstellung befinden und sich die Ausgänge, die zu den rückwärtreibenden Steueranschlüssen (X2, Y2) führen, jeweils an den Grenzen der Ventilkammern (VK3, VK4) des dritten und vierten Steuerventiles (V3, V4) bezüglich der Vor-Rückwärtsstellung befinden, so daß in der Vor- bzw. Rückwärtsstellung jeweils die paarweise Zuordnung der Ausgänge der Steueranschlüsse (X1, Y1; X2, Y2) zu den Ventilkammern (VK1, VK2; VK3, VK4) gegeneinander vertauscht ist.

7. Steuervorrichtung nach einem der vorstehenden-Ansprüche, dadurch gekennzeichnet, daß der Steuerschieber (2) zylindrisch ist und in einer zylindrischen Ausnehmung (B) in dem Steuerblock (1) verdreh- und verschiebbar angeordnet ist und die Ventilkammern (VK1 - VK4) jeweils sich vorzugsweise um etwa 180° umlaufend darum erstrecken und die Kanäle (K1 - K4) und die Ausgänge zu den Steueranschlüssen (X1, X2; Y1, Y2) jeweils um 90° zueinander versetzt und radial zu den Ventilkammern (VK1 VK4) angeordnet sind.

8. Steuervorrichtung nach Anspruch 7, dadurch gekennzeichnet, daß der Steuersteg (20) als zwei Wendelabschnitte, vorzugsweise mit einer Steigung 1, auf dem Steuerschieber (2) angeordnet ist und die Ventile (V1 - V4) in Bohrungen (B1, B2), die sich mit der Ausnehmung (B) jeweils überschneiden, von beiden Seiten in Richtung auf den Steuersteg (20) im Steuerblock (1) angeordnet sind.

9. Steuervorrichtung nach Anspruch 8, dadurch gekennzeichnet, daß die Achsen der Bohrungen (B1, B2) senkrecht zum Verlauf des jeweils zugehörigen Wendelabschnittes des Steuersteges (20) stehen.

10. Steuervorrichtung nach Anspruch 8 oder 9, dadurch gekennzeichnet, daß die Stößel (41 - 44) hülsenförmig ausgebildet in den Bohrungen (B1, B2) axialverschieblich gelagert sind und kraftschlüssig mit den Ventilen (V1 - V4) verbunden sind.

11. Steuervorrichtung nach Anspruch 7, dadurch gekennzeichnet, daß die Kanäle (K1 - K4) und Rückläufe von den Steuerventilen (V1 - V4) durch zusammentreffende, nach außen verschlossene Blindbohrungen im Steuerblock (1) gebildet sind.

12. Steuervorrichtung nach einem der Ansprüche 1 bis 11, dadurch gekennzeichnet, daß das Spindelgetriebe (31) in dem Steuerblock (1) koachsial mit dem Steuerschieber (2) angeordnet ist und abtriebseitig drehbar mit diesem verbunden ist und abtriebseitig im Steuerblock (1) drehgesichert ist.

13. Steuervorrichtung nach Anspruch 12, dadurch gekennzeichnet, daß das Spindelgetriebe (31) antriebsseitig vorzugsweise eine federbelastete Bremse (36, 37) aufweist, die ein vorgegebenes Reibungsmoment erbringt.

14. Steuervorrichtung nach Anspruch 13, dadurch gekennzeichnet, daß die Bremse (36, 37) als ringförmiger Ansatz (36) an der Lenkwelle (35) mit daraufsitzendem Bremsring (37) ausgebildet ist und der Bremsring (37) und der Ansatz (36) innenseitig an einem dicht verschraubten Deckel (38) des Steuerblocks (1) gelagert sind.

15. Steuervorrichtung nach einem der Ansprüche 3 bis 14, dadurch gekennzeichnet, daß das Fahrgestänge (33) an einer Schwenkachse (33′) angreift, die von dem Steuerschieber (2) auf der zum Spindelgetriebe (31) entgegengesetzten Seite aus dem Steuerblock (1) herausgeführt ist.

16. Steuervorrichtung nach einem der vorstehenden Ansprüche, dadurch gekennzeichnet, daß eine Hydraulikpumpe (HP) über Drosseln (W1 - W4) mit den Steueranschlüssen (X1, X2; Y1, Y2) verbunden ist und sämtliche freien Kammern und Ventilabläufe in dem Steuerblock (1) untereinander und mit einem Ablauf (AL) verbunden und zur Hydraulikpumpe (HP) zurückgeführt sind.

17. Steuervorrichtung nach Anspruch 16, dadurch gekennzeichnet, daß die Steueranschlüsse (X1, X2; Y1, Y2) paarweise jeweils auf federbelastete Differentialdruckzylinder geführt sind.


## Claims

1. Control mechanism for steering a vehicle with speed differential, comprising a shifter (2) which can be operated in two directions in a first degree of freedom, a steering degree of freedom (RL), and can be operated in two directions in a second degree of freedom, a forward/reverse speed degree of freedom (RV), the shifter (2) in each case controlling up to two of a total four control valves (V1 - V4) so as to open them as commanded, and the arrangement of the control valves (V1 - V4) to the shifter (2) being such that the latter increasingly opens the first of the control valves (V1) to produce motion forwards and/or to the right, increasingly opens the second of the control valves (V2) to produce motion forwards and/or to the left, increasingly opens the third of the control valves (V3) to produce reverse motion and/or motion to the left, and increasingly opens the fourth of the control valves (V4) to produce reverse motion and/or motion to the left, and said first and second control valves (V1, V2) each going via a first changeover valve (U1) to a forward-travel control connection (X1, Y1) of a respective right-hand propulsion drive (RR) and of a respective left-hand propulsion drive (LR), and said third and fourth control valves (V3, V4) each being connected to a respective one of the two propulsion drives (RR, LR) via a second changeover valve (U2), in each case by a reverse-travel control connection (X2, Y2), characterised in that the shifter (2) directly moves the two direction-change valves (U1, U2) respectively in the forward mode into a first changeover position and in the reverse mode into a second changeover position and that the shifter (2) is connected to a rotatable steering wheel (30) so as to be adjustable in its degree of steering freedom (RL) and is connected to a swivel-type propulsion lever (32) so as to be adjustable only in its forward/reverse speed degree of freedom (RV).

2. Control mechanism according to claim 1, characterised in that the steering wheel (30) is connected to the shifter (2) by means of a spindle transmission (31).

3. Control mechanism according to claim 1, characterised in that the propulsion lever (32) is connected to the shifter (2) by means of a lever linkage (33).

4. Control mechanism according to claim 1, characterised in that the changeover valves (U1, U2) are constituted by valve chambers (VK1 - VK4) in the shifter (2) in conjunction with channels (K1 - K4) coming from the control valves (V1 - V4) and outlets leading to the control connections (X1, X2; Y1, Y2), which are disposed in a control unit (1) tightly enclosing the shifter (2).

5. Control mechanism according to one of the preceding claims, characterised in that the shifter (2) bears control lands (20) arranged diagonally to the directions of the degrees of freedom (RL, RV), each of which actuates the control valves (V1 - V4) by means of a tappet (41 - 44).

6. Control mechanism according to claims 4 and 5, characterised in that respectively in a neutral position and in a position controlling straight-line steering the valve chambers (VK1 - VK4) respectively extend in both directions of the degrees of freedom (RL, RV) and the outlets leading to the forward-propelling control connections (X1, Y1) are respectively situated at borders of the valve chambers (VK1, VK2) of the first and second control valves (V1, V2) as regards the forward/reverse position, and the outlets leading to the reverse-propelling control connections (X2, Y2) are respectively situated at the borders of the valve chambers (VK3, VK4) of the third and fourth control valves (V3, V4) as regards the forward/reverse position, with the result that in the forward or reverse position the respective pairwise assignment of the outlets of the control connections (X1, Y1; X2, Y2) to the valve chambers (VK1, VK2; VK3, VK4) is reversed.

7. Control mechanism according to one of the preceding claims, characterised in that the shifter (2) is cylindrical and is rotatably and displaceably disposed in a cylindrical recess (B) in the control unit (1) and each of the valve chambers (VK1 - VK4) extends around the shifter preferably at about 180° and the channels (K1 - K4) and the outlets to the control connections (X1, X2; Y1, Y2) are each offset by 90° to one another and arranged radially to the valve chambers (VK1, VK4).

8. Control mechanism according to claim 7, characterised in that the control land (2) is arranged on the shifter (2) as two helical sections, preferably with a pitch 1, and the valves (V1 - V4) are arranged in bores (B1, B2) each intersecting with the recess (B) and running from both sides in the direction of the control land (20) in the control unit (1).

9. Control mechanism according to claim 8, characterised in that the axes of the bores (B1, B2) run perpendicular to the profile of the particular corresponding helical section of the control land (20).

10. Control mechanism according to claim 8 or 9, characterised in that the tappets (41 - 44) are sleeve-type parts mounted to be axially movable in the bores (B1, B2) and are non-positively connected to the valves (V1 - V4).

11. Control mechanism according to claim 7, characterised in that the channels (K1 - K4) and returns of the control valves (V1 - V4) are constituted by converging, externally sealed blind bores in the control unit (1).

12. Control mechanism according to one of claims 1 to 11, characterised in that the spindle transmission (31) is arranged in the control unit (1) coaxially with the shifter (2) and is rotatably connected thereto on the driven side and locked against rotation on the driven side in the control unit (1).

13. Control mechanism according to claim 12, characterised in that on the driving side the spindle transmission (31) preferably has a spring-loaded brake (36, 37) providing a predetermined friction torque.

14. Control mechanism according to claim 13, characterised in that the brake (36, 37) is an annular shoulder (36) on the steering shaft (35) with a brake ring (37) seated thereon and the brake ring (37) and the shoulder (36) are internally seated on a tightly screwed cover (38) of the control unit (1).

15. Control mechanism according to one of claims 3 to 14, characterised in that the drive linkage (33) acts on a swivelling axle (33′) which passes out of the control unit (1) from the shifter (20) on the side opposite the spindle transmission (31).

16. Control mechanism according to one of the preceding claims, characterised in that a hydraulic pump (HP) is connected via restrictors (W1 - W4) to the control connections (X1, X2; Y1, Y2) and all the free chambers and valve drain lines in the control unit (1) are connected to one another and to a drain line (AL) and lead back to the hydraulic pump (HP).

17. Control mechanism according to claim 16, characterised in that the control connections (X1, X2; Y1, Y2) run pairwise to respective spring-loaded differential pressure cylinders.

**Revendications**

1. Dispositif de commande pour direction à différence de vitesse d'un véhicule avec une soupape à tiroir (2) actionnable dans deux directions, dans un premier degré de liberté, qui est un degré de liberté de direction (RL), et dans deux directions, dans un second degré de liberté, qui est un degré de liberté de vitesse de marche avant-arrière (RV), la soupape à tiroir (2) commandant respectivement jusqu'à deux de quatre vannes-pilotes (V1 - V4) qu'elle ouvre en fonction de l'actionnement, la disposition des vannes-pilotes (V1 - V4) par rapport à la soupape à tiroir (2) étant telle que celle-ci, étant actionnée en avant et/ou à droite, ouvre progressivement la première V1) des quatre vannes-pilotes, et, actionnée en avant et/ou à gauche, ouvre progressivement la deuxième (V2) vanne-pilote, tandis qu'actionnée en arrière et /ou à droite, elle ouvre progressivement la troisième (V3) des vannes-pilotes, et, actionnée en arrière et/ou à gauche, ouvre progressivement la quatrième (V4) des vannes-pilotes, la première vanne-pilote et la seconde vanne-pilote (V1, V2) étant reliées respectivement, par l'intermédiaire d'une première soupape d'inversion (U1), à un raccord de commande en marche avant (X1, Y!), respectivement d'un organe de translation droite (RR) et d'un organe de translation gauche (LR), et la troisième et la quatrième vannes-pilotes (V3, V4) étant reliées respectivement, par l'intermédiaire d'une seconde soupape d'inversion (U2), aux raccords de commande en marche arrière (X2, Y2) des deux organes de translation respectifs (RR, LR), caractérisé par le fait que les deux valves d'inversion (U1, U2) sont amenées directement par la soupape à tiroir (2), en marche avant, dans une première position d'inversion et, en marche arrière, dans une seconde position d'inversion et que la soupape à tiroir (2) est reliée, réglable dans son degré de liberté (RL), à un volant (30) rotatif et, réglable dans son degré de liberté (RV) avec un levier (32) pivotable.

2. Dispositif de commande selon revendication 1, caractérisé par le fait que le volant (30) est relié à la soupape à tiroir (2) par un engrenage à broche (31).

3. Dispositif de commande selon revendication 1, caractérisé par le fait que le levier (32) est relié à la soupape à tiroir (2) par l'intermédiaire d'une timonerie (33).

4. Dispositif de commande selon revendication 1, caractérisé par le fait que les valves d'inversion (U1, U2) sont formées par des chambres de soupapes (VK1 - VK4) dans la soupape à tiroir (2) en relation avec des canaux (K1 - K4) en provenance des vannes-pilotes (V1 - V4) et des sorties conduisant aux raccords de commande (X1, X2; Y1, Y2), disposés dans un bloc de commande (1), entourant hermétiquement la soupape à tiroir (2).

5. Dispositif de commande selon l'une des revendications précédentes, caractérisé par le fait que la soupape à tiroir (2) est pourvue de ponts de commande (20) disposés diagonalement par rapport aux directions des degrés de liberté (RL, RV) et actionnant les vannes-pilotes (V1-V4) par l'intermédiaire de taquets (41-44) respectifs.

6. Dispositif de commande selon revendications 4 et 5, caractérisé par le fait que, respectivement, dans une position neutre et dans une position de direction en ligne droite, les chambres de soupapes (VK1 - VK4) s'étendent chacune dans les deux sens des degrés de liberté (RL, RV) et que les sorties, conduisant aux raccrods (X1, Y1) pour marche avant, sont situées, respectivement, aux limites des chambres de soupapes (VK1, VK2) en ce qui concerne la position de marche avant-arrière, et que les sorties, conduisant aux raccords (X2, Y2) pour marche arrière, sont situées, respectivement, aux limites des chambres de soupapes (VK3, VK4) des troisième et quatrième vannes-pilotes (V3, V4) en ce qui concerne la position de marche avant et arrière, de sorte qu'en position de marche avant-arrière, l'attribution respective, deux par deux, des sorties des raccords (X1, Y1; X2, Y2) aux chambres de soupapes (VK1, VK2; VK3, VK4) est transposée.

7. Dispositif de commande selon l'une des revendications précédentes, caractérisé par le fait que la soupape à tiroir (2) est cylindrique et est disposée, étant pivotable et déplaçable, dans un évidement (B) cylindrique, dans le bloc de commande (1) et que les chambres de soupapes (VK1 - VK4) les contournent préférentiellement d'environ 180° et que les canaux (K1 - K4) et les sorties en direction des raccords de commande (X1, X2; Y1, Y2) sont décalées respectivement de 90° par rapport les uns aux autres et disposés radialement par rapport aux chambres de soupapes (VK1 - VK4).

8. Dispositif de commande selon revendication 1, caractérisé par le fait que le pont de commande (20) est disposé sur la soupape à tiroir (2), sous forme de deux sections hélicoïdales, de préférence avec pente ascendante 1, et que les vannes-pilotes (V1-V4) sont disposées dans le bloc de commande (1), de part et autre, en direction du pont de commande (20), dans des forures (B1, B2) en intersection avec l'évidement (B).

9. Dispositif de commande selon revendication 8, caractérisé par le fait que les axes des forures (B1, B2) sont perpendiculaires au sens de la section hélicoïdale correspondante du pont de commande (20).

10. Dispositif de commande selon revendication 8 ou 9, caractérisé par le fait que les taquets (41-44), conçus en forme de douilles, sont montés, déplaçables axialement, dans les forures (B1, B2) et reliés de force aux vannes-pilotes (V1-V4).

11. Dispositif de commande selon revendication 7, caractérisé par le fait que les canaux (K1 - K4) et les retours des vannes-pilotes (V1-V4) sont formés par des forures borgnes convergente, qui, fermées vers l'extérieur, sont pratiquées dans le bloc de commande (1).

12. Dispositif de commande selon l'une des revendications 1 à 11, caractérisé par le fait que l'engrenage à broche (31) est disposé dans le bloc de commande (1), étant disposé coaxialement par rapport à la soupape à tiroir (2) et, relié, pivotable, à celui-ci, est assuré contre la rotation dans le bloc de commande (1), du côté sortie.

13. Dispositif de commande selon revendication 12, caractérisé par le fait que l'engrenage à broche (31) présente de préférence un frein chargé par ressort (36, 37) du côté sortie, lequel frein produit un moment de frottement prédéterminé.

14. Dispositif de commande selon revendication 13, caractérisé par le fait que le frein (36, 37) est conçu sous forme d'épaulement annulaire (36) équipant l'arbre de conduite (35) et pourvu d'une bague de freinage (37), et que la bague de freinage (37) et l'épaulement (36) sont montés, à l'intérieur, sur un couvercle (38) du bloc de commande (1), vissé hermétiquement.

15. Dispositif de commande selon l'une des revendications 3 à 14, caractérisé par le fait que la timonerie (33) attaque un arbre de pivotement (33′), qui, sortant du bloc de commande (1), va de la soupape à tiroir (2) au côté opposé à l'engrenage à broche (31).

16. Dispositif de commande selon l'une des revendications précédentes, caractérisé par le fait qu'une pompe hydraulique (HP) est reliée aux raccords de commande (X1, X2; Y1, Y2), par l'intermédiaire de papillons (W1-W4) et que toutes les chambres libres et les sorties des vannes sont reliées entre elles dans le bloc de commande (1) et avec la conduite de décharge (AL) et ramenées à la pompe hydraulique (HP).

17. Dispositif de commande selon revendication 16, caractérisé par le fait que les raccords de commande (X1, X2; Y1, Y2) sont conduites deux par deux sur des cylindres compresseurs différentiels chargés par ressort.

Fig. 1

EP 0 352 431 B1

Fig. 2

Fig. 3

EP 0 352 431 B1

Fig. 4

Fig. 5

Fig. 6

Fig. 7

Fig. 8